# EUROPEAN PATENT APPLICATION

(11) **EP 1 922 934 A1**
(43) Date of publication of application: **21.05.2008**
(21) Application number: 07252432.5
(22) Date of filing: 14.06.2007
(51) Int. Cl.: A22C 9/00, A23L 1/318

(54) **Method for processing meat**

(30) Priority: 17.11.2006 KR 20060114005
(71) Applicant: Yoo, Byoung-Joo, Yangcheon-gu Seoul 158-860 (KR)
(72) Inventor: Yoo, Byoung-Joo, Yangcheon-gu Seoul 158-860 (KR)
(74) Representative: Neobard, William John

(57) **Abstract**

A method for processing meat is provided. The method includes the steps of: putting an additive and water into a mixer (10) at a weight ratio of about 0.01-1.5:1; producing an additive mixture by forcedly mixing the additive and water in the mixer for about 5 to 20 minutes within a temperature range of about 4 to 85°C; collecting the produced additive mixture from the mixer into a mixture injecting device (20); conveying meat (m) loaded on a conveyer (30) disposed under the mixture injecting device (20); injecting about 2 to 10 parts by weight of the additive mixture into about 100 parts by weight of the meat by driving the mixture injecting device (20); and collecting the additive mixture added meat (m) and packaging the collected meat at a rear end of the conveyer.

## Description

The present invention relates to a method for processing meat. Embodiments relate to a method for processing various meat including beef, pork, chicken, duck meat, goat meat, and mutton to soften the meats, removing unique stench from the meats, and adding scent to the meats.

In general, each of meats such as beef, pork, chicken, duck meat, goat meat, and mutton has disadvantages of unique stench, tough fleshy substance, no taste, and less moisture. In order to overcome such disadvantages, various meat processing methods for softening the meats and removing the stench from the meats were introduced.

A conventional meat processing method is disclosed in Korea Patent No. 46046 entitled "METHOD FOR PROCESSING MEAT MEAL USING BAMBOO EXTRACT". The conventional meat processing method softens poultry such as chicken and quail by putting the poultry into a steam processing pot and supplying dry steam to the poultry in the steam processing pot.

Another conventional meat processing method is disclosed in Korea Patent No. 187719, According to another conventional meat processing method, bamboo extract is obtained by heating water mixed with bamboo pole, bamboo leaf, or mixture thereof. Then, the meats beef, pork, chicken, duck meat, goat meat, and mutton are processed using the bamboo extract to clearly remove the stench from the meats.

Embodiments aim to provide a method for processing meats including beef, pork, chicken, duck meat, goat meat, and mutton by softening the meats, removing stench from the meats, and adding scent to the meats in order to improve the preference of consumers for the meats.

Embodiments aim to provide a method for processing meats through injecting a vegetable oil mixture made by forcedly mixing a vegetable oil and water into various types of meats such as chilled meat, frozen meat, and fresh meat.

Embodiments aim to provide a method for processing meat by injecting a broth mixture into the meats, where the broth mixture is made by forcedly mixing water with broth that is made by boiling meat, born, and internal organs of meat to process until the contents thereof soak out sufficiently.

Embodiments aim to provide a method for processing various types of meat such as chilled meat, frozen meat, and fresh meat through injecting fat mixture made by mixing water with fat from a processed meat.

According to an aspect of the present invention, there is provided a method for processing meat including the steps of: putting an additive and water into a mixer at a weight ratio of about 0.01-1.5:1, where the mixer include a mixing screw disposed at an inside bottom, and a heat wire embedded in a side wall, or thermal oil charged in the side wall; producing an additive mixture by forcedly mixing the additive and water in the mixer for about 5 to 20 minutes within a temperature range of about 4 to 85°C ; collecting the produced additive mixture from the mixer into a mixture injecting device by driving a pump, where the mixture injecting device includes the pump connected to the mixer at one side and a plurality of injectors disposed at a bottom, which make a reciprocating motion in a top to bottom direction; conveying meat m loaded on a conveyer disposed under the mixture injecting device; injecting about 2 to 10 parts by weight of the additive mixture into the meat m that is 100 parts by weight by driving the mixture injecting device to control the injectors making a reciprocating motion in a top to bottom direction at a regular interval while the meat conveyed by the conveyer is passing under a plurality of the injectors disposed at the bottom of the mixture injecting device; and collecting the additive mixture added meat m and packaging the collected meat at a rear end of the conveyer.

An embodiment will now be described, by way of example only, with reference to the accompanying drawings, in which:
FIG. 1 is a block diagram illustrating a meat processing system for processing meat using a method for processing meat according to an embodiment;
FIG. 2 is a diagram illustrating a step of injecting mixture made according to an embodiment, in into meats loaded on a conveyer; and
FIG. 3 is a flowchart illustrating a method for processing meat according to an embodiment.

Wherever possible, the same reference numbers will be used throughout the drawings to refer to the same or like parts.

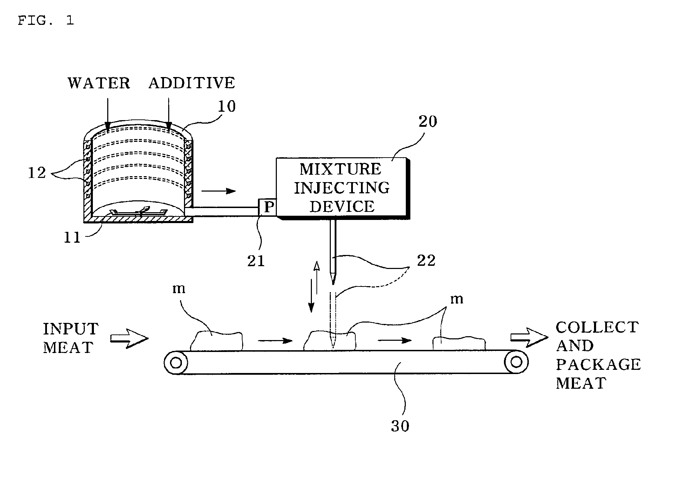

The method for processing meat of the present embodiment is performed by a meat processing system shown in FIG. 1.

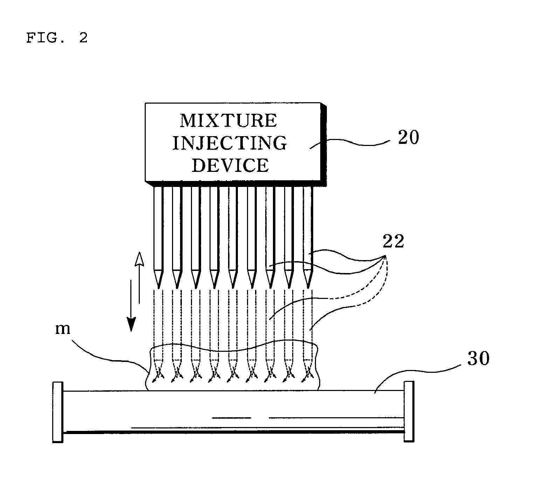

Referring to FIG. 1 and FIG. 2, a mixer 10 includes a mixing screw 11 disposed at an inside bottom side of the mixer 10 and a heat wire 12 embedded in a side wall of the mixer 10. In stead of embedding the heat wire 12, thermal oil may be charged in the side wall of the mixer 10 as a heating unit.

A pump 21 connected to the mixer 10 is disposed at one side of a mixture injecting device 20, and a plurality of injectors 22 are disposed at the bottom of the mixture injecting device 20. The plurality of injectors 22 can make a reciprocating motion in a top to bottom direction.

A conveyer 30 is disposed at a predetermined distance separated from the bottom of the mixture injecting device 20. The conveyer 30 conveys various types of meats m such as frozen meat, chilled meat, and fresh meat.

A method for processing meats of this embodiment, which is performed by the meat processing system, will be described hereinafter.

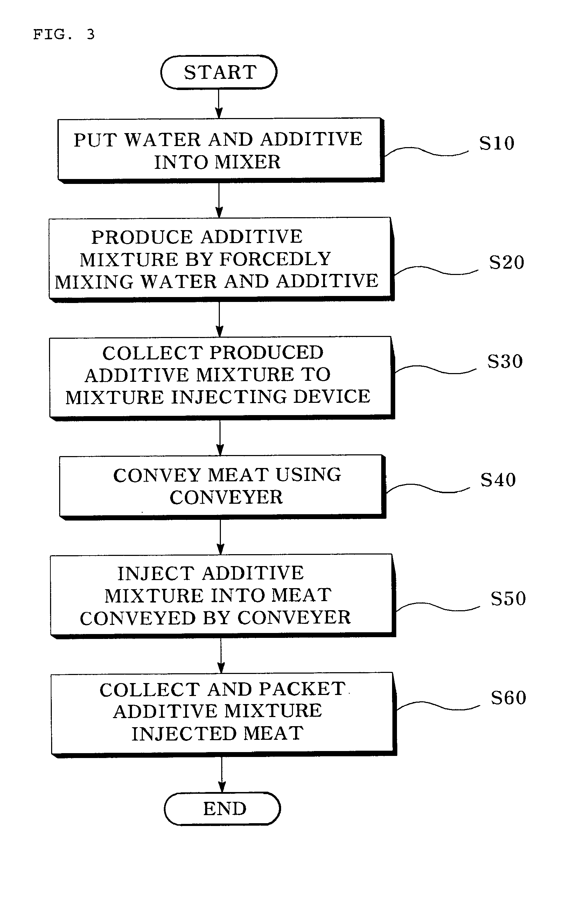

Referring to FIG. 3, an additive and water are mixed in the mixer 10 at a weight ratio of about 0.01-1.5:1 at step S10.

In one embodiment a vegetable oil is added to water as the additive. For example, the vegetable oil may be olive oil, aroma oil, palm oil, graph-stone oil, sunflower oil, coconut oil, corn oil, bean oil, and sesame oil.

In an embodiment fat or broth of a processed meat is used as an additive to be added to water in the mixer 10. The broth is made by boiling meat, born, or internal organs of a processed meat until the contents thereof soak out sufficiently.

When the mixture of additive and water is about 100 parts by weight, at least one or more of about 4 to 40 parts by weight of salt, about 4 to 40 parts by weight of sodium bicarbonate, about 10 to 75 parts by weight of sorbitol, about 1 to 8 parts by weight of monosodium glutamate (MSG), about 1 to 8 parts by weight of vitamin C, about 1 to 8 parts by weight of polyphosphates, and about 1 to 5 parts by weight of tocopherol are added as the additive according to needs.

Such additives have special features as follows.

The sodium bicarbonate functions as an inflating agent.

The sorbitol is an alcohol form of substance combined with 6 -OH by deoxidizing the aldehyde of glucose. As a feed additive, the sorbitol is less sweetness, prevents denaturation of protein, and controls wetting. Since the sorbitol has superior characteristic of preserving scent, the sorbitol sustains the scent of feed and drink for long time.

Monosodium L-Glutamate is well known as MSG. The monosodium L-Glutamate is a white crystalline compound used as a food additive to enhance flavor although monosodium L-Glutamate has no taste. MSG is widely used to produce a chemical seasoning by mixing it with inosinic acid. MSG is well known in Korea as a product name 'Mi-won'.

The vitamin C (Ascorbic Acid) suppresses carcinogen from being generated while the stomach and intestines digest food and prevents a cancel to get. Also, the vitamin C delays aging of cells by being absorbed in the small intestine and prevents a deadly disease such as hardening of the arteries. Furthermore, the vitamin C detoxifies and cures toxication of chemicals, and prevents allege and fatigue.

The polyphosphates are produced through mixing monophosphate according to a use. The polyphosphates purifies eyes and enhances binding capacity.

The tocopherol (vitamin E) saves about 43% of oxygen used by cells, and prevents unsaturated fatty acid, vitamin A, beta carotene, and sex hormone from being oxidized.

After putting the additive and water in the mixer 10, an additive mixture is produced by forcedly mixing water and the additive through driving the mixing screw 11 and the heat wire 12 of the mixer 10 for about 5 to 20 minutes within a temperature range of about 4 to 85°C at step S20. After producing the additive mixture, the produced additive mixture is collected into the mixture injecting device 20 by driving the pump 21 of the mixture injecting device 20 at step S30.

After collecting the produced additive mixture into the mixture injecting device 20, chilled meat or fresh meat m is loaded on a convey belt of the conveyer 30 and is conveyed to the mixture injecting device 20 by driving the conveyer 30 at step S40.

While the meat m loaded on the convey belt of the conveyer 30 as shown in FIG. 1 and FIG. 2 is passing under the mixture injecting device 20, the mixture injecting device 20 injects the additive mixture into the meat m by driving a plurality of injectors 22 to make a reciprocating motion in a top to bottom direction at a predetermined time interval at step S50. At the step S50, it is preferable to inject about 2 to 10 parts by weight of the additive mixture into the meat m that is 100 parts by weight. After injecting the additive mixture into the meat m, the additive mixture injected meat m is collected at the rear end of the conveyer 30 and packaged at step S60.

Hereinafter, a method for processing meat according to a preferred embodiment of the present invention will be described. Also, a result of evaluating the meat processed according to the present embodiment through roasting the processed meat and testing the roasted meat will be described based on a 5 point scaling method.

### [Embodiment]

About 0.01 to 1.5kg of olive oil and about 1kg of water are putted into the mixer 10. Then, an olive oil mixture is produced by forcedly mixing the olive oil and the water for about 5 to 20 minutes within a temperature range of about 4 to 85°C. The olive oil mixture is collected into the mixture injecting device 20. While beef m loaded on the convey belt of the conveyer 30 is passing under the mixture injecting device 20, the mixture injecting device 20 injects about 2 to 10kg of the olive mixture into about 100kg of frozen, chilled, or fresh beef m by driving a plurality of injectors 22 to make a reciprocating motion in a top to bottom direction at a predetermined time interval. After injecting the olive mixture into the beef m, the beef m is collected and packaged.

After roasting the chilled beef processed according to the present embodiment and a non-processed chilled beef, fifty testers including man, woman, and children taste and evaluate the roasted processed beef compared with the non-processed beef based on the 5 point scaling method in tenderness before roast, tenderness after roast, stench before roast, stench after roast, and scent of olive oil. Table 1 shows the results of the evaluation.

**Table 1**

| | Non process chilled beef | Processed chilled beef |
|---|---|---|
| Tenderness before roast | 2.5 | 3.5 |
| Tenderness after roast | 3.1 | 4.8 |
| Stench before roast | 2.3 | 4.1 |
| Stench after roast | 3.3 | 4.9 |
| Scent of olive oil | 1 | 4.6 |
| Overall point | 2.26 | 4.38 |

| | | |
|---|---|---|
| * tenderness - 5: very tender, 4: tender, 3: normal, 2: tough, 1: very tough * stench - 5: no stench, 4: almost no stench, 3: normal, 2: little stench, 1: much stench. * olive oil scent - 5: very, 4: little, 3: normal, 2: almost non, 1: non | | |

As shown in Table 1, if vegetable oil is inputted into meat according to the meat processing method of the present embodiment, the tenderness of the meat is improved, the stench is removed from the meat, and the meat diffuses the scent of the vegetable oil. Therefore, the overall preference of the processed meat is superior. Although it is not shown in Table 1, the results of evaluating frozen or fresh beef processed according to the present embodiment by comparing it with non-processed frozen beef and fresh beef are obtained similarly to that shown in Table 1. Therefore, the overall preference of the processed beef according to the present embodiment is excellent.

As described above, an additive mixture is produced by forcedly mixing water with vegetable oils, and broth or fat of a processed meat, and the produced additive mixture is injected into the meat according to the certain embodiment of the present invention. As a result, the meat becomes tendered, stench thereof is removed from the meat, and the processed meat diffuses the scent of oil, thereby the preference of a consumer for the processed meat is enhanced.

The invention is not restricted to the described features of the embodiments.

## Claims

1. A method for processing meat comprising the steps of:
putting an additive and water into a mixer at a weight ratio of about 0.01-1.5:1, where the mixer include a mixing screw disposed at an inside bottom, and a heat wire embedded in a side wall, or thermal oil charged in the side wall;
producing an additive mixture by forcedly mixing the additive and water in the mixer for about 5 to 20 minutes within a temperature range of about 4 to 85°C;
collecting the produced additive mixture from the mixer into a mixture injecting device by driving a pump, where the mixture injecting device includes the pump connected to the mixer at one side and a plurality of injectors disposed at a bottom, which make a reciprocating motion in a top to bottom direction;
conveying meat m loaded on a conveyer disposed under the mixture injecting device;
injecting about 2 to 10 parts by weight of the additive mixture into about 100 parts by weight of the meat by driving the mixture injecting device to control the injectors making a reciprocating motion in a top to bottom direction at a regular interval while the meat conveyed by the conveyer is passing under a plurality of the injectors disposed at the bottom of the mixture injecting device; and
collecting the additive mixture added meat m and packaging the collected meat at a rear end of the conveyer.

2. The method of claim 1, wherein a vegetable oil is used as an additive mixed with water in the mixer.

3. The method of claim 1, wherein one of olive oil, aroma oil, palm oil, graph-stone oil, sunflower oil, coconut oil, corn oil, bean oil, and sesame oil is used as an additive mixed with water in the mixer.

4. The method of any preceding claim, wherein broth made by boiling meat, born, or internal organ of a processed meat until contents thereof soak out sufficiently is used as an additive mixed with water in the mixer.

5. The method of any preceding claim, wherein fat of a processed meat is used as an additive to be mixed with water in the mixer.

6. The method of claim 1, wherein when the mixture of the additive and water is 100 parts by weight and an additive and water is putted into the mixer at a weight ratio of about 0.01-1.5: 1, at least one or more of about 4 to 40 parts by weight of salt, about 4 to 40 parts by weight of sodium bicarbonate, about 10 to 75 parts by weight of sorbitol, about 1 to 8 parts by weight of monosodium glutamate (MSG), about 1 to 8 parts by weight of vitamin C, about 1 to 8 parts by weight of polyphosphates, and about 1 to 5 parts by weight of tocopherol is further added.
